# EUROPEAN PATENT SPECIFICATION

(11) **EP 3 192 599 B1**
(45) Date of publication and mention of the grant of the patent: **13.03.2019**
(21) Application number: 17151509.1
(22) Date of filing: 13.01.2017
(51) Int. Cl.: B22F 3/105, B22F 5/00, B22F 5/10, B23D 61/18, B26D 1/547, B26D 1/553, B22F 3/24

(54) **METHOD FOR REMOVING PARTIALLY SINTERED POWDER FROM INTERNAL PASSAGES OF ELECTRON BEAM ADDITIVE MANUFACTURED PARTS**
VERFAHREN ZUR ENTFERNUNG VON TEILWEISE GESINTERTEM PULVER AUS INNEREN DURCHGÄNGEN VON ELEKTRONENSTRAHLADDITIV HERGESTELLTEN TEILEN
PROCÉDÉ DE ÉLIMINATION DE POUDRE PARTIELLEMENT FRITTÉE DES PASSAGES INTERNES DES PIÈCES FABRIQUÉES PAR FABRICATION ADDITIVE DE FAISCEAU D'ÉLECTRONS

(30) Priority: 13.01.2016 US 201614994351
(43) Date of publication of application: 19.07.2017
(73) Proprietor: United Technologies Corporation, Farmington, CT 06032 (US)
(72) Inventor: TWELVES, Wendell V. Jr, Glastonbury, CT 06033 (US); BUTCHER, Evan, Manchester, CT 06042 (US); RIZZO, John P., Vernon, CT 06066 (US)
(74) Representative: Dehns

(56) References cited:
- EP-A2- 3 069 805
- GB-A- 2 517 490
- JP-A- 2013 194 263
- US-A1- 2006 118 532

## Description

### BACKGROUND

This invention relates to fluid passageways in gas turbine engines. In particular the invention relates to fluid passageways such as lightweight metal ducts formed by electron beam additive manufacturing (EBAM).

Gas turbine engines typically include a compressor section to pressurize airflow, a combustor section to burn a hydrocarbon fuel in the presence of the pressurized air, and a turbine section to extract energy from the resultant combusting gasses.

In the gas turbine industry, methods for fabricating components with internal passageways such as blades and vanes in the turbine section and fluid ducts in other sections such as bleed-air systems and lubrication systems using additive manufacturing invite significant attention. Since a component is produced in a continuous process in an additive manufacturing operation, features associated with conventional manufacturing processes such as machining, forging, welding, casting, etc. can be eliminated leading to savings in weight, cost, material and time.

An inherent feature of metallic components with internal passageways fabricated by powder based additive manufacturing is that removal of partially sintered powder in completed fused passageways following fabrication may be an issue.

US 2006/118532 A1 discloses a prior art controlled cooling method for laser sintering part-cake.

### SUMMARY

According to the invention there is provided a method of removing partially sintered powder from an internal passage in a metal component formed by electron beam additive manufacturing (EBAM) as set forth in claim 1.

Features of embodiments of the invention are set forth in the dependent claims.

### BRIEF DESCRIPTION OF THE DRAWINGS

FIG. 1 is a schematic view of an example gas turbine engine.
FIG. 2 is a flow diagram of an electron beam additive manufacturing process.
FIG. 3 is a schematic view of a representative electron beam additive manufacturing process.
FIG. 4A and 4B are schematic views before and during powder removal of the invention.

### DETAILED DESCRIPTION

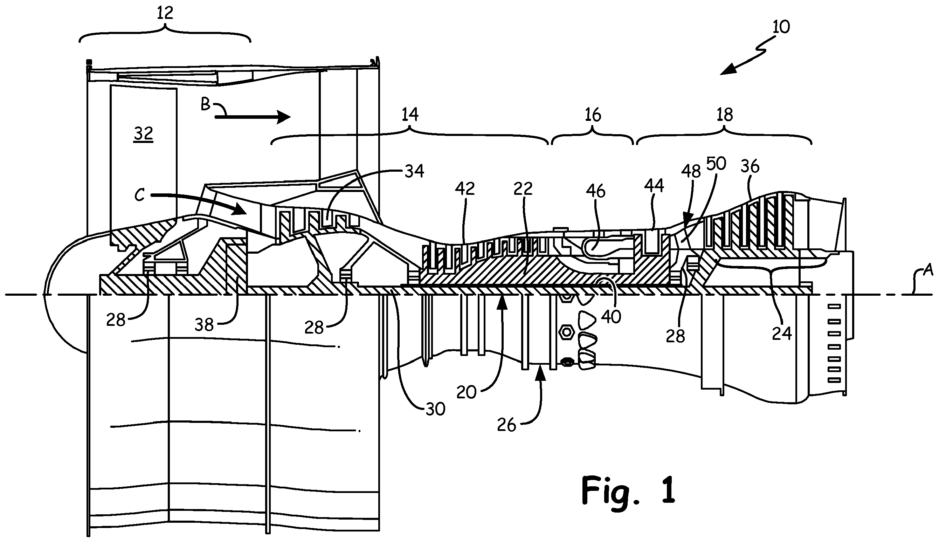

FIG. 1 schematically illustrates an example gas turbine engine 10 that includes fan section 12, compressor section 14, combustor section 16 and turbine section 18. Fan section 12 drives air along bypass flow path B while compressor section 14 draws air in along core flow path C where air is compressed and communicated to combustor section 16. In combustor section 16, air is mixed with fuel and ignited to generate a high pressure exhaust gas stream that expands through turbine section 18 where energy is extracted and utilized to drive fan section 12 and compressor section 14.

Example engine 10 generally includes low speed spool 20 and high speed spool 22 mounted for rotation about an engine central longitudinal axis A relative to engine static structure 26 via several bearing systems 28. It should be understood that various bearing systems 28 and various locations may alternatively or additionally be provided.

Low speed spool 20 generally includes inner shaft 30 that connects fan 32 and low pressure (or first) compressor section 34 to low pressure (or first) turbine section 36. Inner shaft 30 drives fan 32 through a speed change device, such as geared architecture 38, to drive fan 32 at a lower speed than the low speed spool 20. High speed spool 22 includes outer shaft 40 that interconnects high pressure (or second) compressor section 42 and high pressure (or second) turbine section 44. Inner shaft 30 and outer shaft 40 are concentric and rotate via bearing system 28 about engine central longitudinal axis A.

Combustor 46 is arranged between high pressure compressor 42 and high pressure turbine 44. In one example, high pressure turbine 44 includes at least two stages to provide a double stage high pressure turbine 44. In another example high pressure turbine 44 includes only a single stage. As used herein, a "high pressure" compressor or turbine experiences a higher pressure than a corresponding "low pressure" compressor or turbine.

Mid turbine frame 48 of engine static structure 26 is arranged generally between high pressure turbine 44 and low pressure turbine 36. Mid frame 48 further supports bearing systems 28 and turbine section 18 as well as directing airflow entering low pressure turbine 36.

Airflow through core flow path C is compressed by low pressure compressor 34 then by high pressure compressor 42 mixed with fuel and ignited in combustor 46 to produce high speed exhaust gases that are then expanded through high pressure turbine 44 and low pressure turbine 36. Mid turbine frame 48 includes vanes 50 which are in the core airflow path and function as an inlet guide vane for low pressure turbine 36. Utilizing vane 50 of mid turbine frame 48 as inlet guide vane for low pressure turbine 36 decreases the length of low pressure turbine 36 without increasing the axial length of mid turbine frame 48. Reducing or eliminating the number of vanes in low pressure turbine 36 shortens the axial length of turbine section 18. Thus the compactness of gas turbine engine 10 is increased and a higher power density may be achieved.

The example bleed air system discussed here is described in commonly owned U.S. Patent Application Publication No. 2014/0165588 to Snape et al.

The example describes a plurality of bleed air outlets and associated duct work as well as heat exchanger components with internal passages connected to high pressure compressor 42 that, when fabricated by electron beam additive manufacturing (EBAM), are faced with issues of removing sintered powder from the passages following fabrication. A method for removing the sintered powder from these passages is described below.

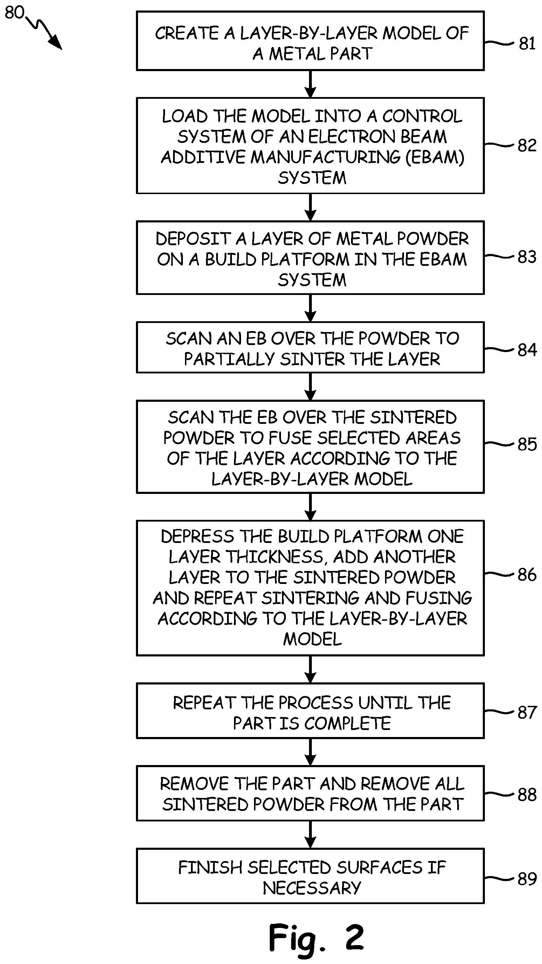

The electron beam additive manufacturing (EBAM) process for forming components having internal passages is discussed in commonly owned U.S. Patent Application Publication No. 2014/0169981 to Bales et al. EBAM process 80 is shown in FIG. 2. In the first step, a digital layer by layer model of a metal part is created (step 81). In the next step, the model is loaded into the control system of an EBAM manufacturing system (step 82). A single layer of metal powder with a diameter of from
about 20 microns to about 100 microns having the desired alloy composition is deposited on a build platform in the EBAM system (step 83). A focused electron beam (EB) is then scanned over the entire build platform to partially sinter the layer (step 84). In the next step, the EB is scanned over the sintered powder, typically at a slower rate to fuse portions of the layer that form a solid portion of the final product according to the layer by layer model of the product (step 85). In the build process, the build platform is then indexed down by one powder layer thickness. Another layer of powder is added and the sintering and fusing operations are repeated (step 86). The step by step process is repeated until the part is complete (step 87). The part is then removed from the EBAM manufacturing system and the partially sintered, unfused powder is removed from the part (step 88). If necessary, selected surfaces are mechanically finished to produce a final part (step 89).

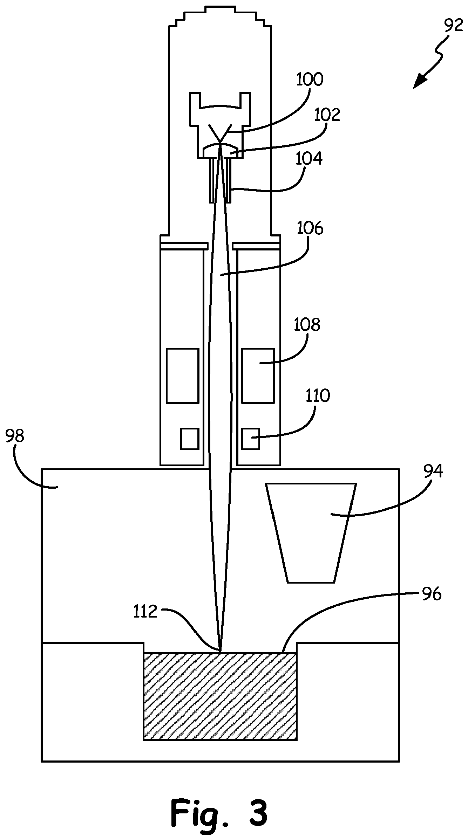

FIG. 3 is a diagram illustrating EBAM system 92 used to form parts having internal passages. Alloy powder is held in powder supply 94 and powder is deposited on build table 96 in vacuum chamber 98. Filament 100, grid cup 102 and anode 104 create electron beam 106, which passes through focus coil 108 and is directed by deflection coil 110 to strike selected areas of the powder layer on build table 96 at position 112. Beam 106 moves based on a predetermined two dimensional pattern from the digital file. Once the pattern is complete for one layer, a next layer of powder and a new two dimensional pattern are subjected to the same treatment until all the patterns have been applied. Build table 96 is designed to be lowered by the thickness of the alloy powder layer after each pass. As noted above, powder may have an average diameter of from about 20 microns to about 100 microns, though other powder sizes may be used. The component being built may be made of a nickel base alloy, cobalt base alloy, iron base alloy, titanium base alloy, aluminum base alloy, copper base alloy, or mixtures thereof

As noted above, with EBAM additive manufacturing, there are two forms of metal in a finished part. One form is the solid fused alloy product itself. The other form is partially sintered alloy powder that is sintered to the degree where it forms a frangible, but solid powder structure that will not flow freely under the influence of gravity. A sufficient number of interparticle bonds must be broken in order for the unfused powder to be removed from the finished part. Typically, an abrasive grit blast process using matching metal powder is used to remove the partially sintered powder from external surfaces and shallow recesses of an EBAM manufactured part. Removal of partially sintered powder from internal chambers and non-line of sight passages remains a problem in EBAM structures.

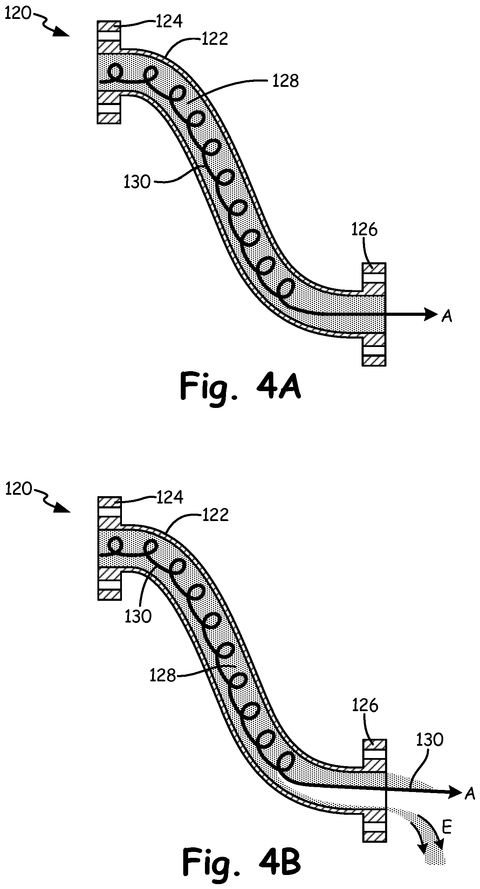

FIGS. 4A and 4B are diagrams illustrating a process by which the above-mentioned difficult-to-remove partially sintered powder can be removed from internal passages and chambers. FIG. 4A is a schematic view of a cross-section of metal duct 120 fabricated by EBAM. Metal duct 120 comprises solid wall 122 and solid end flanges 124 and 126. The interior of duct 120 is filled with partially sintered alloy powder 128 and helical wire cutter 130. Helical wire cutter 130 is co-grown in the interior of duct 120 during EBAM manufacturing of duct 120 - that is, the digital layer by layer model of the metal part, including metal duct 120, includes a layer by layer model of helical wire cutter 130 so that the structure of helical wire cutter 130 is formed inside metal duct 120 during the EBAM process. The diameter of wire cutter 130 may be from about 0.020 inches (0.51mm) to about 0.25 inches (6.35mm). In a particular embodiment, the diameter of wire cutter 130 may be from about 0.060 inches (1.52 mm) to about 0.125 inches (3.18mm). The wire cutter 130 is a helix with a radial shape of a circle, oval, square, or triangle, for example. To effect removal of partially sintered powder 128 from duct 120, wire cutter 130 is pulled in the direction of arrow A to extract wire cutter 130 from duct 120. In order to aid extraction, the end of wire cutter 130 may have a gripping element such as a loop, ball, threads, or another gripping element known in the art.

As wire cutter 130 is extracted from duct 120, the coils of wire cutter 130 straighten. Straightening of wire cutter 130 imparts a localized shearing action on partially sintered powder 128, thereby separating weak interparticle bonds in the powder in the region near end flange 126, which causes the powder to be ejected from duct 120 as schematically indicated by arrows E as shown in FIG. 4B. Removal of the partially sintered powder from the cavity may be assisted by orienting the part to enable gravity, vibration, and air jet or fluid jet.

In an embodiment, partially sintered powder extraction by the present invention may be improved by nesting multiple helical wire cutters inside one another. This may be useful in passages with larger cross-sections. While the invention discloses a method to remove partially sintered powder from a narrow passage, assemblies of wire cutters arranged in large inaccessible inner chambers may also be formed to perform the same function.

## Claims

1. A method of removing partially sintered powder (128) from an internal passage in a metal component (120) formed by electron beam additive manufacturing (EBAM) comprising:
co-forming a solid wire cutter (130) in the passage during EBAM formation of the metal component (120); and
removing partially sintered powder (128) from the passage by extracting the solid wire cutter (130) from the passage, wherein the solid wire cutter (130) is a helical coil with a radial shape that conforms to an interior of the passage such that as the wire coil straightens during extraction, the solid wire cutter (130) shears interparticle bonds in the partially sintered powder (128).

2. The method of claim 1, wherein extracting the solid wire cutter (130) from the passage comprises gripping an end of the solid wire cutter (130) and pulling it out of the passage.

3. The method of claim 2, wherein an end of the solid wire cutter (130) includes a gripping element comprising a loop, a ball, or threads.

4. The method of any preceding claim, wherein the radial shape comprises a circle, oval, square, or triangle.

5. The method of any preceding claim, wherein the solid wire cutter (130) comprises nested helical coils.

6. The method of any preceding claim, wherein the metal component (120) is made of a nickel base alloy, cobalt base alloy, iron base alloy, titanium base alloy, aluminum base alloy, copper base alloy, or mixtures thereof.

7. The method of any preceding claim, wherein the solid wire cutter (130) has a diameter of from 0.51 mm (0.020 inches) to 6.35 mm (0.25 inches).

8. The method of any preceding claim, wherein the solid wire cutter (130) has a diameter of from 1.52 mm (0.060 inches) to 3.18 mm (0.125 inches).

9. The method of any preceding claim, wherein the solid wire cutter (130) comprises assemblies of wire cutters arranged in a large inaccessible chamber in the metal component (120).

10. The method of any preceding claim, wherein the metal component (120) comprises a gas turbine engine component.

11. The method of claim 10, wherein the gas turbine engine component is one of a heat exchanger, bleed air system, or lubrication system.

## Patentansprüche

1. Verfahren zur Entfernung von teilweise gesintertem Pulver (128) aus einem inneren Durchgang in einer Metallkomponente (120), die durch elektronenstrahladditive Herstellung (EBAM) gebildet ist, Folgendes umfassend:
Mitbilden eines festen Drahtschneiders (130) in dem Durchgang während der EBAM-Bildung der Metallkomponente (120); und
teilweises Entfernen von gesintertem Pulver (128) von dem Durchgang durch Extrahieren des festen Drahtschneiders (130) von dem Durchgang, wobei der feste Drahtschneider (130) eine schraubenförmige Spule mit einer radialen Form ist, die sich an eine Innenseite des Durchgangs derart anpasst, dass die Drahtspule sich während des Extrahierens streckt, wobei der feste Drahtschneider (130) Bindungen zwischen Partikel in dem teilweise gesinterten Pulver (128) abschert.

2. Verfahren nach Anspruch 1, wobei das Extrahieren des festen Drahtschneiders (130) von dem Durchgang das Greifen eines Endes des festen Drahtschneiders (130) und sein Ziehen aus dem Durchgang umfasst.

3. Verfahren nach Anspruch 2, wobei ein Ende des festen Drahtschneiders (130) ein Greifelement beinhaltet, das eine Schleife, eine Kugel oder Gewinde umfasst.

4. Verfahren nach einem der vorstehenden Ansprüche, wobei die radiale Form einen Kreis, ein Oval, ein Quadrat oder ein Dreieck umfasst.

5. Verfahren nach einem der vorstehenden Ansprüche, wobei der feste Drahtschneider (130) verschachtelte schraubenförmige Spulen umfasst.

6. Verfahren nach einem der vorstehenden Ansprüche, wobei die Metallkomponente (120) aus einer nickelbasierten Legierung, einer kobaltbasierten Legierung, einer eisenbasierten Legierung, einer titanbasierten Legierung, einer aluminiumbasierten Legierung, einer kupferbasierten Legierungen oder Mischungen daraus produziert ist.

7. Verfahren nach einem der vorstehenden Ansprüche, wobei der feste Drahtschneider (130) einen Durchmesser von 0,51 mm (0,020 Inch) bis 6,35 mm (0,25 Inch) aufweist.

8. Verfahren nach einem der vorstehenden Ansprüche, wobei der feste Drahtschneider (130) einen Durchmesser von 1,52 mm (0,060 Inch) bis 3,18 mm (0,125 Inch) aufweist.

9. Verfahren nach einem der vorstehenden Ansprüche, wobei der feste Drahtschneider (130) Anordnungen von Drahtschneidern umfasst, die in einer großen nicht zugänglichen Kammer in der Metallkomponente (120) angeordnet sind.

10. Verfahren nach einem der vorstehenden Ansprüche, wobei die Metallkomponente (120) eine Gasturbinentriebwerkkomponente umfasst.

11. Verfahren nach Anspruch 10, wobei die Gasturbinentriebwerkkomponente eines von einem Wärmetauscher, einem Entlüftungssystem oder einem Schmiersystem ist.

## Revendications

1. Procédé d'élimination d'une poudre partiellement frittée (128) d'un passage interne dans un composant métallique (120) formé par fabrication additive par faisceau d'électrons (EBAM), comprenant :
la formation conjointe d'un coupe-fil massif (130) dans le passage pendant la formation par EBAM du composant métallique (120) ; et
l'élimination de la poudre partiellement frittée (128) du passage par extraction du coupe-fil massif (130) du passage, dans lequel le coupe-fil massif (130) est une bobine hélicoïdale dotée d'une forme radiale qui épouse les contours d'une partie intérieure du passage de sorte qu'au fur et à mesure que la bobine de fil se redresse pendant l'extraction, le coupe-fil massif (130) cisaille les liaisons entre particules de la poudre partiellement frittée (128).

2. Procédé selon la revendication 1, dans lequel l'extraction du coupe-fil massif (130) du passage comprend la saisie d'une extrémité du coupe-fil massif (130) et sa sortie du passage par traction.

3. Procédé selon la revendication 2, dans lequel une extrémité du coupe-fil massif (130) comporte un élément de saisie comprenant une boucle, une bille ou des filets.

4. Procédé selon une quelconque revendication précédente, dans lequel la forme radiale comprend un cercle, un ovale, un carré ou un triangle.

5. Procédé selon une quelconque revendication précédente, dans lequel le coupe-fil massif (130) comprend des bobines hélicoïdales imbriquées.

6. Procédé selon une quelconque revendication précédente, dans lequel le composant métallique (120) est constitué d'un alliage à base de nickel, d'un alliage à base de cobalt, d'un alliage à base de fer, d'un alliage à base de titane, d'un alliage à base d'aluminium, d'un alliage à base de cuivre ou de leurs mélanges.

7. Procédé selon une quelconque revendication précédente, dans lequel le coupe-fil massif (130) a un diamètre allant de 0,51 mm (0,020 pouce) à 6,35 mm (0,25 pouce).

8. Procédé selon une quelconque revendication précédente, dans lequel le coupe-fil massif (130) a un diamètre allant de 1,52 mm (0,060 pouce) à 3,18 mm (0,125 pouce).

9. Procédé selon une quelconque revendication précédente, dans lequel le coupe-fil massif (130) comprend des assemblages de coupe-fils agencés dans une vaste chambre inaccessible du composant métallique (120).

10. Procédé selon une quelconque revendication précédente, dans lequel le composant métallique (120) comprend un composant de turbine à gaz.

11. Procédé selon la revendication 10, dans lequel le composant de turbine à gaz est l'un parmi un échangeur de chaleur, un circuit de prélèvement d'air ou un circuit de lubrification.
